# EUROPÄISCHE PATENTSCHRIFT

(11) **EP 2 921 075 B1**
(45) Veröffentlichungstag und Bekanntmachung des Hinweises auf die Patenterteilung: **10.04.2019**
(21) Anmeldenummer: 15157319.3
(22) Anmeldetag: 03.03.2015
(51) Int. Cl.: A47B 21/06, H02G 3/12, H01R 25/00

(54) **Tisch- oder Geräteplattenanchlussfeld**
TABLE OR DEVICE PLATE CONNECTION FIELD
CHAMP DE RACCORDEMENT À PLAQUE POUR APPAREIL OU TABLE

(30) Priorität: 06.03.2014 DE 102014102961
(43) Veröffentlichungstag der Anmeldung: 23.09.2015
(73) Patentinhaber: Schulte-Elektrotechnik GmbH & Co. KG, 58515 Lüdenscheid (DE)
(72) Erfinder: Rittinghaus, Hendrik, 58579 Schalksmühle (DE)
(74) Vertreter: Patentanwälte Dörner & Kötter PartG mbB

(56) Entgegenhaltungen:
- WO-A2-2010/037390
- DE-A1- 2 430 707
- DE-B3-102012 109 885
- US-A- 4 053 082
- US-A- 5 913 439
- US-A1- 2013 316 570

## Beschreibung

Die Erfindung betrifft ein Tisch- oder Geräteplattenanschlussfeld für Netzspannungsanschlüsse und/oder Informationsanschlüsse, mit einem Gehäuse, das mit einem Kragen versehen ist und Befestigungseinrichtungen aufweist, wobei ein Steckdoseneinsatz mit Steckplätzen vorgesehen ist, wobei die Befestigungseinrichtungen von Rippen gebildet sind, die an zwei gegenüberliegenden Seiten des Gehäuses vorgesehen sind und unter einem Winkel von 5° zur Horizontalen ausgerichtet sind, und dass die Rippen mit Verspannungselementen korrespondieren.

Tisch- oder Geräteplattenanschlussfelder sind in vielfältiger Weise bekannt. Sie stellen die Netzspannung und/oder die Informationsversorgung für bewegliche Datengeräte und andere Stromverbraucher bereit. Die bekannten Vorrichtungen sind in einer Tisch- oder Geräteplatte oder einem Fußboden angeordnet. Zum Anschluss der Verbraucher sind die Anschlussfelder aufklappbar. Beim Aufklappen werden die Netzspannungs- und Informationsanschlüsse aus der Platte bzw. dem Fußboden freigelegt und sind somit sichtbar. Die Anschlüsse können in dieser Position zum Einstecken der Stecker der Datengeräte und/oder Stromverbraucher genutzt werden.

Tisch- oder Geräteplattenanschlussfelder benötigen in der Tisch- oder Geräteplatte bzw. dem Fußboden eine sichere Befestigung, um einen zuverlässigen Anschluss an die elektrische Gebäudeinstallation sowie Datenkabel erfordert. Gleichzeitig muss gewährleistet sein, dass beim Einstecken von Steckern elektrischer Verbraucher oder Datenverarbeitungsgeräten die Tisch- oder Geräteplattenanschlussfelder spielfrei in den Platten bzw. dem Fußboden angeordnet sind. Hierzu finden Befestigungsvorrichtungen in Form von Schraubverbindungen Anwendung (vgl. bspw. DE 24 32 619 A1 oder US 5 913 439 A). Es sind auch Lösungen bekannt, bei denen gelochte Laschen nach dem Einsetzen der Anschlussfelder in der die jeweilige Tisch- oder Geräteplatte bzw. dem Fußboden auf der Unterseite der Platte bzw. des Bodens umgebogen werden und durch die Lochung eine Schraube in die Platte bzw. in den Fußboden eingebracht wird. Zwar ist diese Art der Befestigung zuverlässig und erfüllt somit ihren Zweck; sie weist jedoch den Nachteil auf, dass ihre Installation aufwändig ist. Insbesondere die Tatsache, dass die Befestigung auf der Unterseite der jeweiligen Platte bzw. dem Fußboden stattfindet, macht die Montage umständlich. Bei runden Gehäusen lassen sich Lösungen realisieren, die eine Drehverbindung der Teile ermöglichen (vgl. bspw. US 4 053 082 A).

Tisch- oder Geräteplattenanschlussfelder sind auch aus der DE 24 30 707 A1 und WO 2010/037390 A2 bekannt, bei denen Befestigungseinrichtungen mit Rippen oder Rasteinrichtungen beschrieben sind.

Hier will die Erfindung Abhilfe schaffen. Der Erfindung liegt die Aufgabe zugrunde, ein Tisch- oder Geräteplattenanschlussfeld für Netzspannungsanschlüsse und/oder Informationsanschlüsse zu schaffen, das einfach und zugleich zuverlässig montierbar ist.

Mit der Erfindung ist ein Tisch- oder Geräteplattenanschlussfeld für Netzspannungsanschlüsse und/oder Informationsanschlüsse geschaffen, welches einfach und zugleich zuverlässig montierbar ist. Dies ist dadurch hervorgerufen, dass aufgrund der Korrespondenz zwischen den an dem Gehäuse unter einem Winkel angeordneten Rippen und den Verspannungselementen eine Klemmwirkung hervorgerufen ist, die die Anschlussfelder ortsfest in den Platten bzw. dem Fußboden hält. Versuche haben ergeben, dass der Winkel von 5° für eine Verklemmung als besonders geeignet ist.

In Weiterbildung der Erfindung sind die Rippen an den beiden Stirnseiten des Gehäuses vorgesehen. Diese Ausgestaltung weist den Vorteil auf, dass der Wege für die Verspannung des Anschlussfeldes relativ kurz ist, so dass auch die Verspannungselemente lediglich geringe Abmessungen aufweisen. Dies führt einerseits zu einer verbesserten Handhabung, andererseits sind die Kosten dadurch reduziert.

In anderer Weiterbildung der Erfindung sind die Rippen mit Nuten versehen. Die Nuten führen eine verbesserte Klemmwirkung herbei, wodurch die Befestigung zusätzliche Stabilität erhält.

In vorteilhafter Weiterbildung der Erfindung sind die Rippen unter einem Anstellwinkel angebracht und die Verspannungselemente an mindestens einer ihrer Längsseiten mit einer Abkantung versehen. Hierdurch ist einerseits eine zuverlässige Korrespondenz zwischen den Rippen und den Verspannungselementen hervorgerufen. Andererseits führt der Anstellwinkel in Korrespondenz mit der Abkantung zu der Möglichkeit, ein Lösen der Befestigungseinrichtung durch einfaches Kippen der Verspannungselemente in die der jeweiligen Stirnseite abgewandte Richtung zu ermöglichen. Somit ist eine schnelle Lösbarkeit gewährleistet, welche die Stabilität nicht negativ beeinflusst.

In anderer Ausgestaltung der Erfindung weisen die Verspannungselemente Vorsprünge auf. Die Vorsprünge korrespondieren mit den Nuten in den Rippen und rufen so eine Verzahnung beim Verspannen der Verspannungselemente mit den Rippen hervor. Somit ist eine zusätzliche Sicherheit gegen selbsttätiges Lösen der Befestigungseinrichtung verhindert.

Andere Weiterbildungen und Ausgestaltungen der Erfindung sind in den übrigen Unteransprüchen angegeben. Ausführungsbeispiele der Erfindung sind in den Zeichnungen dargestellt und werden nachfolgend im Einzelnen beschrieben. Es zeigen:
- Figur 1: die perspektivische Darstellung eines Tisch- oder Geräteplattenanschlussfeldes in geschlossenem Zustand;
- Figur 2: die Ansicht des in Figur 1 dargestellten Tisch- oder Geräteplattenanschlussfeldes;
- Figur 3: die Draufsicht auf das in Figur 1 dargestellte Tisch- oder Geräteplattenanschlussfeld;

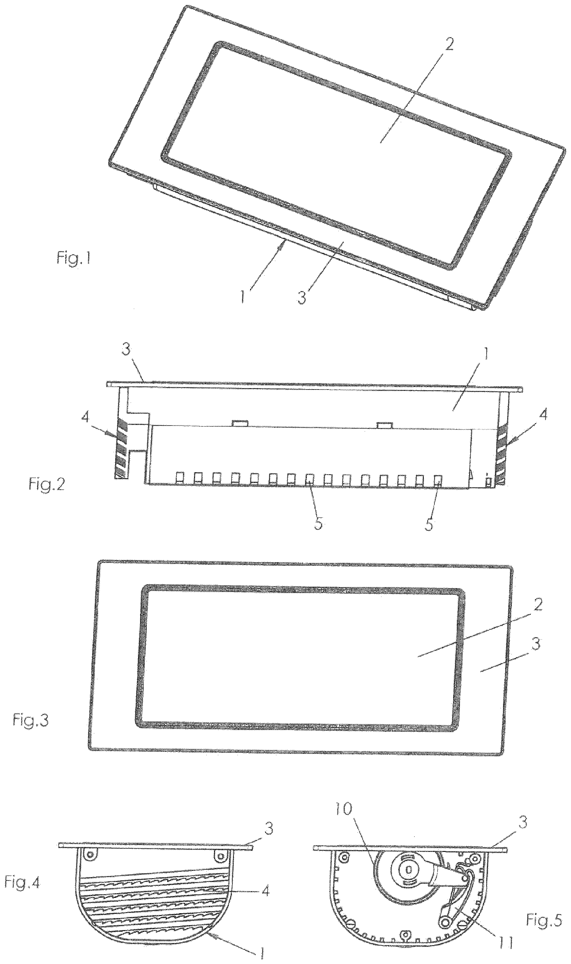

- Figur 3: die Draufsicht auf das in Figur 1 dargestellte Tisch- oder Geräteplattenanschlussfeld;
- Figur 4: die Seitenansicht auf das in Figur 1 dargestellte Tisch- oder Geräteplattenanschlussfeld;
- Figur 5: die Seitenansicht auf den Steckdoseneinsatz in geschlossener Position;

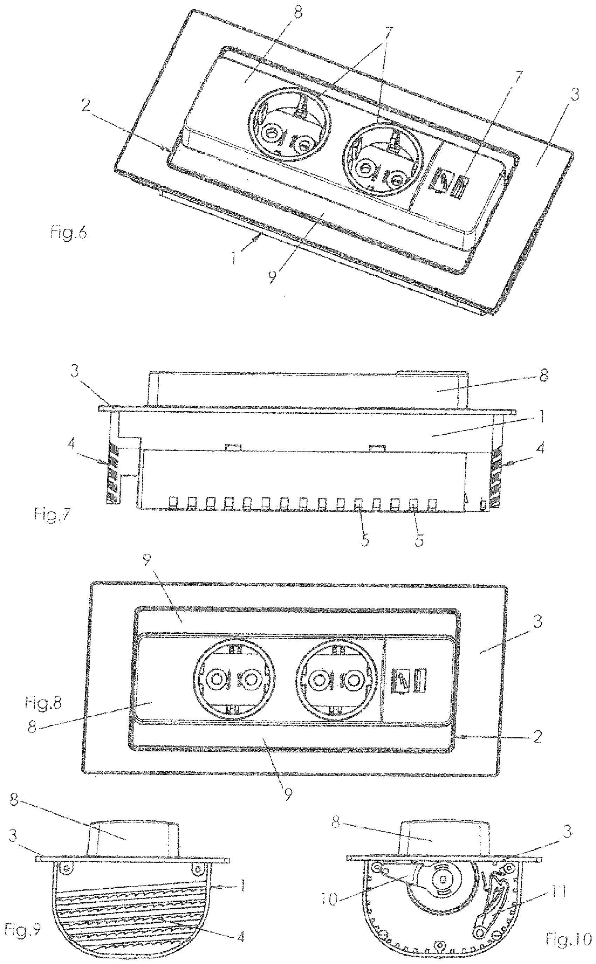

- Figur 6: die perspektivische Darstellung des in Figur 1 dargestellten Tischoder Geräteplattenanschlussfeldes in Betriebsposition;
- Figur 7: die Ansicht des in Figur 6 dargestellten Tisch- oder Geräteplattenanschlussfeldes;
- Figur 8: die Draufsicht auf das in Figur 6 dargestellte Tisch- oder Geräteplattenanschlussfeld;
- Figur 9: die Seitenansicht des in Figur 6 dargestellten Tisch- oder Geräteplattenanschlussfeldes;
- Figur 10: die Seitenansicht auf den Steckdoseneinsatz in Betriebsposition;

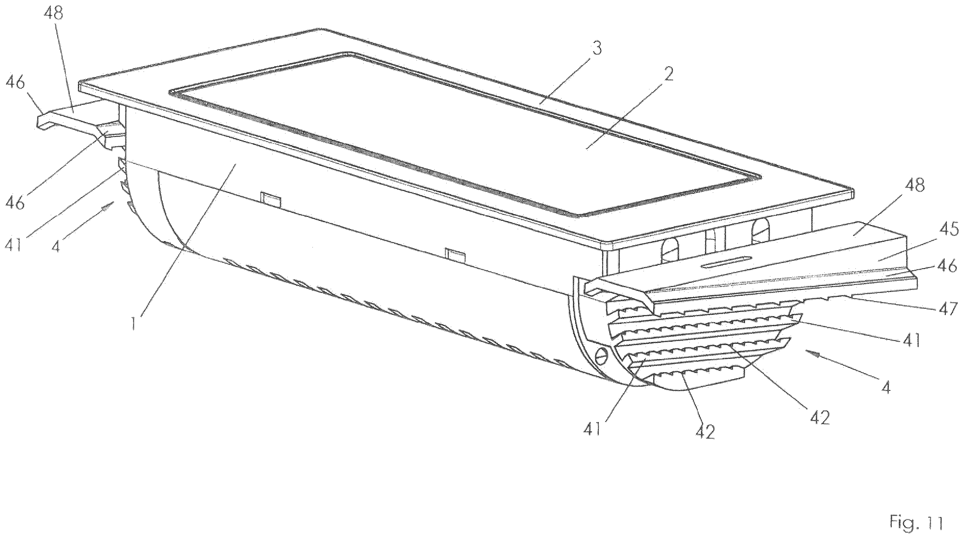

- Figur 11: eine perspektivische Darstellung des in Figur 1 dargestellten Tisch- oder Geräteplattenanschlussfeldes in geschlossenem Zustand mit Verspannungselementen;

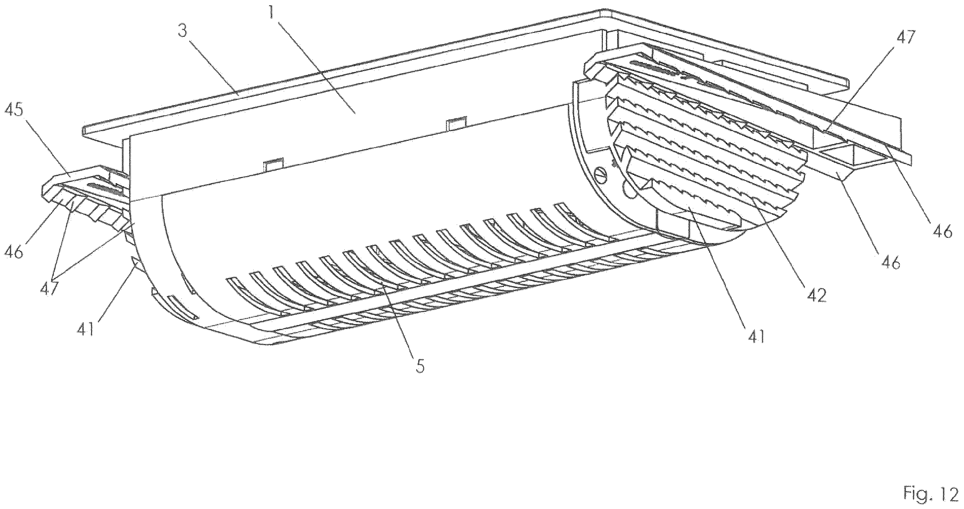

- Figur 12: eine perspektivische Ansicht von unten des in Figur 11 dargestellten Tisch- oder Geräteplattenanschlussfeldes mit Verspannungselementen;

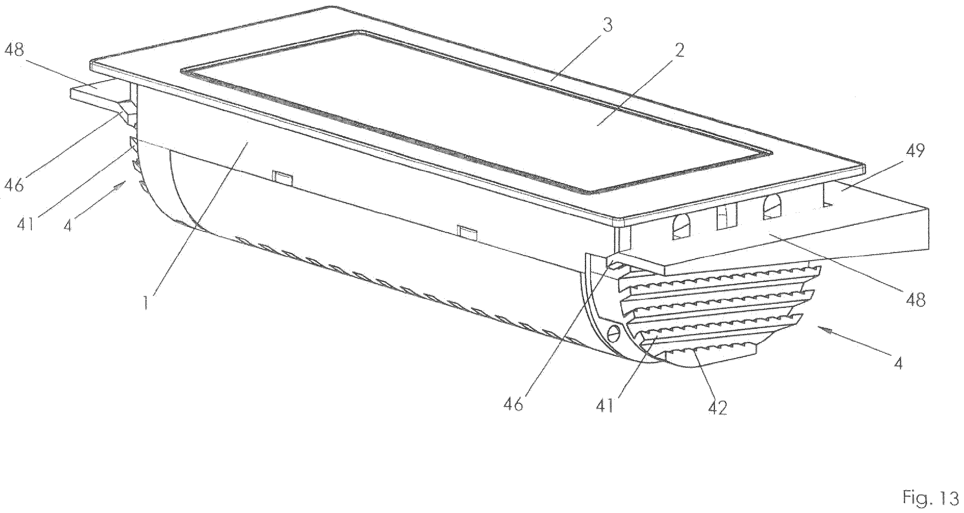

- Figur 13: eine perspektivische Darstellung des in Figur 1 dargestellten Tisch- oder Geräteplattenanschlussfeldes in geschlossenem Zustand mit Verspannungselementen in anderer Ausbildung;

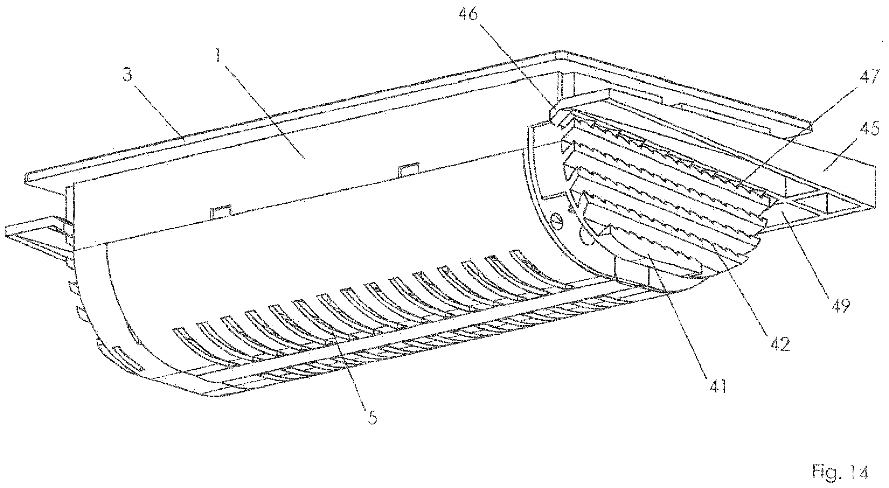

- Figur 14: eine perspektivische Ansicht von unten des in Figur 13 dargestellten Tisch- oder Geräteplattenanschlussfeldes mit Verspannungselementen;

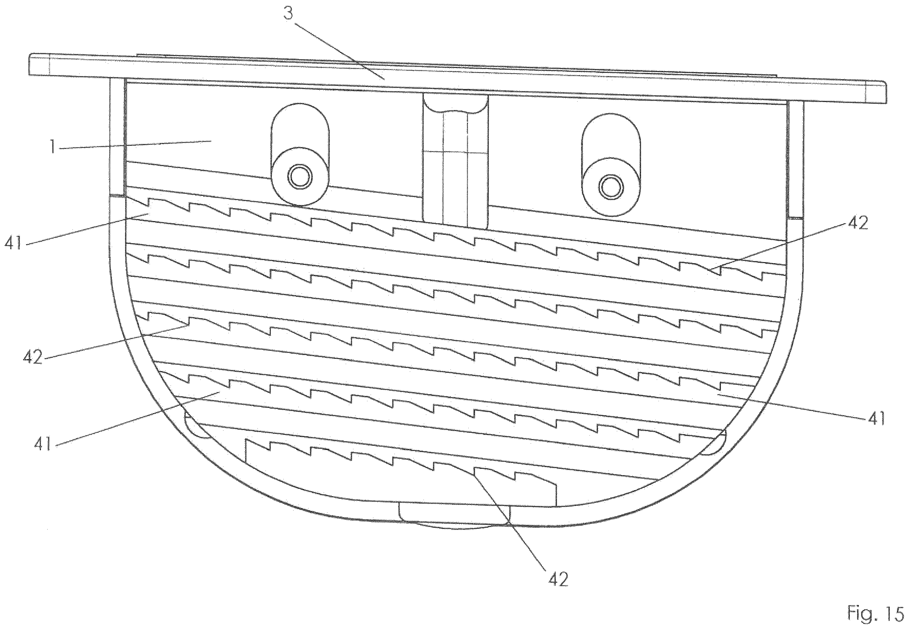

- Figur 15: die Seitenansicht auf das in Figur 1 dargestellte Tisch- oder Geräteplattenanschlussfeld in vergrößerter Darstellung;

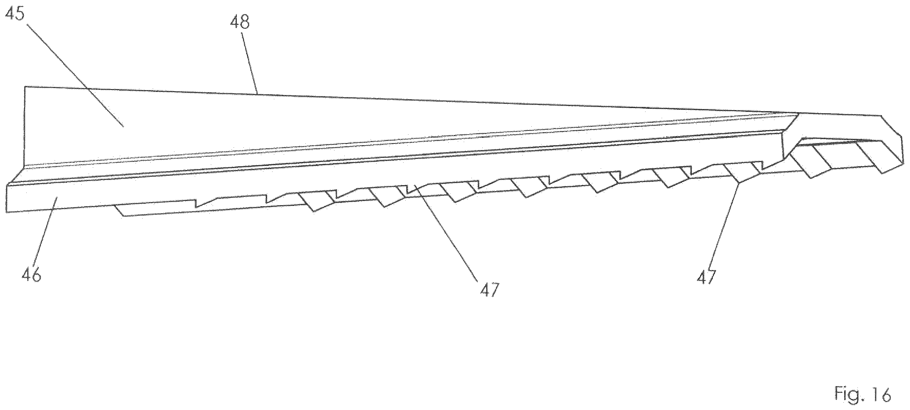

- Figur 16: die Seitenansicht auf ein Verspannungselement in vergrößerter Darstellung.

Das als Ausführungsbeispiel gewählte Tisch- oder Geräteplattenanschlussfeld für Netzspannungsanschlüsse und/oder für Informationsanschlüsse umfasst ein Gehäuse 1, in dem ein Steckdoseneinsatz 2 angeordnet ist. Das Gehäuse 1 ist mit einem Kragen 3 versehen, der in montiertem Zustand des Anschlussfeldes auf der Tisch- oder Geräteplatte bzw. dem Fußboden aufliegt. Der Kragen 3 überdeckt in montiertem Zustand die für die Aufnahme des Anschlussfeldes in der Platte oder dem Fußboden vorgesehene Öffnung.

Das Gehäuse 1 weist eine wannenartige Form auf. Es ist im Ausführungsbeispiel an seinen Stirnseiten mit Befestigungseinrichtungen 4 versehen, mit denen eine zuverlässige Befestigung des Anschlussfeldes an der Tisch- oder Geräteplatte bzw. dem Fußboden erfolgen kann. Die Befestigungseinrichtungen 4 sind von Rippen 41 gebildet, die an zwei gegenüberliegenden Seiten des Gehäuses 4 vorgesehen sind. Im Ausführungsbeispiel sind die Rippen 41 an den Stirnseiten des Gehäuses 4 vorgesehen. Die Rippen 41 sind unter einem Winkel zur Horizontalen ausgerichtet. Erfindungsgemäss beträgt der Winkel 5° zur Horizontalen. Gleichzeitig sind die Rippen 41 unter einem Anstellwinkel an den Stirnseiten angebracht, wobei der Winkel im Ausführungsbeispiel 45° beträgt. Die Rippen 41 sind mit Nuten 42 versehen.

Die Rippen 41 korrespondieren mit Verspannungselementen 45, die keilartig ausgebildet sind. Die Verspannungselemente 45 sind an mindestens einer ihrer Längsseiten mit einer Abkantung 46 versehen, die unter einem Winkel von 45° ausgerichtet ist und daher mit dem Anstellwinkel der Rippen 41 korrespondiert. Die Abkantungen 46 weisen Vorsprünge 47 auf, die in Art und Ausrichtung auf die Nuten 42 der Rippen 41 abgestimmt sind. Auf ihrer der Tisch- oder Geräteplatte bzw. dem Fußboden zugewandten Seite sind die Verspannungselemente 45 mit einer glatten Klemmfläche 48 versehen.

Im Ausführungsbeispiel nach den Figuren 11 und 12 sind die Verspannungselemente 45 an ihren beiden Längsseiten mit Abkantungen 46 versehen. Es besteht so die Möglichkeit, mit einem Verspannungselement 45 zwei benachbart zueinander angeordnete Tisch- oder Geräteplattenanschlussfelder mit einem Verspannungselement 45 zu befestigen. Im Ausführungsbeispiel nach den Figuren 13 und 14 sind die zur Befestigung eines Tisch- oder Geräteplattenanschlussfeldes vorgesehenen Verspannungselemente 45 durch eine Brücke 49 miteinander verbunden, so dass eine Art Rahmen ausgebildet ist, der das jeweilige Tisch- oder Geräteplattenanschlussfeld nach dem Befestigen an drei Seiten umgibt.

Auf seiner dem Kragen 3 abgewandten Seite ist das Gehäuse 1 mit Schlitzen 5 versehen. Die Schlitze 5 ermöglichen das Abfließen von in das Gehäuse 1 eintretenden Flüssigkeiten. Ebenso besteht beispielsweise beim Einbau des erfindungsgemäßen Anschlussfeldes in einer Küche die Möglichkeit, Krümel oder der gleichen aus dem Gehäuse 1 zu entfernen.

Der Kragen 3 weist auf seiner dem Fußboden oder der Tisch- oder Geräteplatte zugewandten Seite einen Hinterschnitt 6 auf. Der Hinterschnitt 6 ist zur Aufnahme einer - nicht dargestellten - Dichtung geeignet, so dass eine zusätzliche Sicherheit gegen das Eindringen von sich über die Platte oder den Fußboden ergießenden Flüssigkeiten geschaffen ist.

Der Steckdoseneinsatz 2 ist mit Steckplätzen 7 versehen. Bei den Steckplätzen handelt es sich im Ausführungsbeispiel um zwei Steckdosen für Netzspannungsanschlüsse und einen Steckplatz für Informationsanschlüsse. Selbstverständlich ist eine andere Verteilung und Anzahl an Steckplätzen als die im Ausführungsbeispiel gezeigte möglich. Der Steckdoseneinsatz 2 ist mit einem Vorsprung 8 versehen, in dem die Steckplätze 7 angeordnet sind. Erkennbar erstreckt sich im Ausführungsbeispiel der Vorsprung 8 über die gesamte Länge des Steckdoseneinsatzes 2. Der Vorsprung 8 weist dabei eine geringere Breite als der Steckdoseneinsatz 2 auf, wodurch an den Längsseiten des Vorsprungs 8 ein Rand 9 ausgebildet ist.

Der Steckdoseneinsatz 2 ist in dem Gehäuse 1 um 180° um seine Längsachse drehbar angeordnet. In Abwandlung des Ausführungsbeispiels besteht die Möglichkeit, andere Drehwinkel zu ermöglichen. So besteht beispielsweise die Möglichkeit, den Steckdoseneinsatz auch um 360° drehbar auszugestalten. Auch das Vorsehen eines geringeren Drehwinkels ist möglich, um beispielsweise eine dem Benutzer zugewandte, leicht schräg gestellte Einsteckposition zu realisieren.

Im Ausführungsbeispiel ist an den Stirnseiten des Steckdoseneisatzes 2 ein Drehwinkelbegrenzer 10 vorgesehen. Der Drehwinkeibegrenzer 10 korrespondiert in geschlossener Position des Anschlussfeldes mit einer Kulisse 11, wie dies in Figur 5 erkennbar ist. In der betriebsbereiten Position des Anschlussfeldes befindet sich der Drehwinkelbegrenzer 10 dagegen in unmittelbarer Nähe zum Kragen 3 und dient somit als Anschlag, wie dies Figur 10 zu entnehmen ist.

Bei der Befestigung des erfindungsgemäßen Tisch- oder Geräteplattenanschlussfeldes wird dieses in bekannter Weise in eine in der Tisch- oder Geräteplatte bzw. dem Fußboden vorgesehene Öffnung eingesetzt und liegt in dieser Position mit dem Kragen 3 auf der Platte bzw. dem Fußboden auf. Zum Befestigen des Anschlussfeldes wird in einfacher Weise im Ausführungsbeispiel nach den Figuren 11 und 12 an beiden Stirnseiten des Anschlussfeldes ein Verspannungselement 45 angesetzt. Durch Verschieben der Verspannungselemente 45 parallel zu den Stirnseiten treten die Abkantungen 46 mit den Rippen 41 in Kontakt. Die Vorsprünge 47 fassen dabei hinter die Nuten 42 der Rippen 41. Gleichzeitig stützt sich die Klemmfläche 48 der Verspannungselemente 45 an der Unterseite der Platte bzw. des Fußbodens ab. Die endgültige Befestigungsposition ist erreicht, sobald ein weiteres Verschieben der Verspannungselemente 45 nicht mehr möglich ist. Durch die Kombination der Nuten 42 mit den Vorsprüngen 47 ist eine Rastverbindung geschaffen, die ein selbsttätiges Zurückrutschen der Spannungselemente 45 verhindert. Die Befestigung mit Hilfe der in den Ausführungsbeispielen nach den Figuren 13 und 14 dargestellten rahmenartig ausgebildeten Verspannungselemente 45 erfolgt in gleicher Weise, wobei hierbei der Vorteil darin besteht, dass mit einer einzigen Handbewegung beide Verspannungselemente 45 gleichzeitig an den beiden Stirnseiten die Klemmwirkung hervorrufen können.

Bei der Ausgestaltung nach den Figuren 11 und 12 ist aufgrund der an den Verspannungselementen 45 vorgesehenen Abkantungen 46 zudem die Möglichkeit geschaffen, eine einfache Lösbarkeit zu erreichen. Hierzu ist es lediglich erforderlich, die Verspannungselemente 45 um ihre Längsachse in die der jeweiligen Stirnseiten abgewandte Richtung zu kippen. Dadurch werden die Abkantungen von den Rippen freigegeben, so dass das Anschlussfeld problemlos aus der Öffnung in der Platte bzw. dem Fußboden herausnehmbar ist.

## Patentansprüche

1. Tisch- oder Geräteplattenanschlussfeld für Netzspannungsanschlüsse und/oder Informationsanschlüsse, mit einem Gehäuse (1), das mit einem Kragen (3) versehen ist und Befestigungseinrichtungen (4) aufweist, wobei ein Steckdoseneinsatz (2) mit Steckplätzen (7) vorgesehen ist, wobei die Befestigungseinrichtungen (4) von Rippen (41) gebildet sind, die an zwei gegenüberliegenden Seiten des Gehäuses (1) vorgesehen sind und unter einem Winkel von 5° zur Horizontalen ausgerichtet sind, und dass die Rippen (41) mit Verspannungselementen (45) korrespondieren, wobei die Verspannungselemente (45) keilartig ausgebildet sind.

2. Anschlussfeld nach Anspruch 1, **dadurch gekennzeichnet, dass** die Rippen (41) an den beiden Stirnseiten des Gehäuses (1) vorgesehen sind.

3. Anschlussfeld nach einem oder mehreren der vorgenannten Ansprüche, **dadurch gekennzeichnet, dass** die Rippen (41) mit Nuten (42) versehen sind.

4. Anschlussfeld nach einem oder mehreren der vorgenannten Ansprüche, **dadurch gekennzeichnet, dass** die Rippen (41) unter einem Anstellwinkel angebracht sind und die Verspannungselemente (45) an mindestens einer ihrer Längsseiten mit einer Abkantung (46) versehen sind.

5. Anschlussfeld nach einem oder mehreren der vorgenannten Ansprüche, **dadurch gekennzeichnet, dass** die Verspannungselemente (45) Vorsprünge (47) aufweisen.

## Claims

1. Table or device plate connection field for mains voltage connections and/or information connections with a housing (1), which is provided with a collar (3) and has fasteners (4), wherein a socket insert (2) with slots (7) is provided, wherein the fasteners (4) are formed by ribs (41), which are provided on two opposite sides of the housing (1) and are oriented at an angle of 5° to the horizontal and the ribs (41) correspond with bracing elements (45), wherein the bracing elements (45) are wedge-shaped.

2. Connection field according to claim 1, **characterised in that** the ribs (41) are provided on both end faces of the housing (1).

3. Connection field according to one or more of the previous claims, **characterised in that** the ribs (41) are provided with grooves (42).

4. Connection field according to one or more of the previous claims, **characterised in that** the ribs (41) are arranged at a setting angle and the bracing elements (45) are provided with a chamfer (46) on at least one of their longitudinal sides.

5. Connection field according to one or more of the previous claims, **characterised in that** the bracing elements (45) have projections (47).

## Revendications

1. Panneau de connexion sur plaque de table ou d'appareil, recevant des connexions de tension secteur et/ou des connexions informatiques, comprenant un boîtier (1) muni d'un collet (3) et présentant des dispositifs de fixation (4), sachant qu'est prévu un insert (2) équipé de prises (7), sachant que les dispositifs de fixation (4) sont formés par des nervures (41) prévues sur deux côtés se faisant face du boîtier (1) et orientées selon un angle de 5° par rapport à l'horizontale, et sachant que les nervures (41) épousent des éléments de gauchissement (45), sachant que les éléments de gauchissement (45) sont en forme de coin.

2. Panneau de connexion selon la revendication 1, **caractérisé en ce que** les nervures (41) sont prévues sur les deux côtés frontaux du boîtier (1).

3. Panneau de connexion selon l'une ou plusieurs des revendications précédentes, **caractérisé en ce que** les nervures (41) sont munies de gorges (42).

4. Panneau de connexion selon l'une ou plusieurs des revendications précédentes, **caractérisé en ce que** les nervures (41) sont fixées selon un angle d'inclinaison et que les éléments de gauchissement (45) sont dotés d'un bord relevé (46) sur au moins un de leurs côté longitudinaux.

5. Panneau de connexion selon l'une ou plusieurs des revendications précédentes, **caractérisé en ce que** les éléments de gauchissement (45) présentent des saillies (47).
